# EUROPÄISCHE PATENTSCHRIFT

(11) **EP 1 964 699 B1**
(45) Veröffentlichungstag und Bekanntmachung des Hinweises auf die Patenterteilung: **21.05.2014**
(21) Anmeldenummer: 07014356.5
(22) Anmeldetag: 21.07.2007
(51) Int. Cl.: B60J 1/18

(54) **Verdeck eines Cabriolet-Fahrzeuges**
Soft top for a convertible
Capote d'un véhicule cabriolet

(30) Priorität: 20.01.2007 DE 102007003016
(43) Veröffentlichungstag der Anmeldung: 03.09.2008
(73) Patentinhaber: Valmet Automotive Oy, 23500 Uusikaupunki (FI)
(72) Erfinder: Diestelkämper, Thomas, 49124 Georgsmarienhütte (DE); Hüdepohl, Stefan, 49143 Bissendorf (DE); Wietheger, Thorsten, 49152 Bad Essen (DE); Schreier, Michael, 49205 Hasbergen (DE); Bücker, Ralf, 49170 Hagen (DE); Gerigk, Josef, 49124 Georgsmarienhütte (DE)
(74) Vertreter: Kronthaler, Schmidt & Coll.

(56) Entgegenhaltungen:
- EP-A- 0 878 337
- EP-A- 1 695 853
- DE-U1- 29 508 425
- DE-U1- 29 817 980
- US-A- 5 851 637
- US-A1- 2002 047 290

## Beschreibung

Die Erfindung betrifft ein Verfahren zur Herstellung eines Verdeckbezugs eines Cabriolet-Fahrzeugs und dessen Festlegung an einer Scheibe des Verdecks nach der im Oberbegriff des Patentanspruches 1 näher definierten Art.

Bei aus der Praxis bekannten Verdecken für Cabriolet-Fahrzeuge erfolgt die Festlegung des Verdeckbezugs an einer Heckscheibe aufgrund eines möglichen Ausfransens der Kante des Bezugsstoffes und aus Festigkeitsgründen üblicherweise mittels eines Anbindens eines Umzugs des Verdeckstoffes an die Scheibe.

Aus der EP 0 992 381 A2 ist ein Cabriolet-Fahrzeug mit einer Heckscheibe aus Glas bekannt, welche über ein Kunststoff-Verbindungselement mit einem Verdeckbezug durch Hochfrequenz-Schweißung verbunden ist. Ein Scheibenrand der Heckscheibe und ein Randbereich des Verdeckbezugs sind dabei in einer Überdeckungszone direkt miteinander verschweißt, wobei als Verbindungselement eine Schweißfolie vorgesehen ist, die eine umlaufende Zwischenlage bildet. In einem Randbereich des Verdeckbezugs ist dieser mit einer zu einem Scheibenrand hin umgelegten und zumindest teilweise auf der Schweißfolie aufliegenden Randfalte versehen, welche mittels einer Naht oder dergleichen Verbindungsteil fixiert ist und einen Umbug bildet.

Nachteilhafterweise ist die Festlegung eines mit einem Umbug versehenen Verdeckbezugs an einer Scheibe nur mittels sehr aufwändiger Verarbeitungsprozesse herstellbar. Eine derartige Verbindung eines Verdeckbezugs mit einer Scheibe weist aufgrund der mehrschichtigen Verbindung zur Scheibe hin - neben der direkten Verbindung des Verdeckstoffes mit der Scheibe ist auch die Verbindung innerhalb des Umbugs festigkeitsrelevant - eine Festigkeit auf, die eventuell nicht in jedem Anwendungsfall ausreicht. Zudem sind nachteilhafterweise ein vergleichsweise großer Bauraum senkrecht zur Scheibe und Kerben in dem Umbug notwendig.

Aus der DE 197 24 592 C1 ist ein Verdeck eines Kraftfahrzeugs bekannt, wobei ein Verdeckflächenelement mit einem anderen Konstruktionselement verbunden ist. Um Verbindungsnähte und die Verbindungsnähte abdichtende Gummierungen oder dergleichen zu vermeiden, sind bei diesem bekannten Verdeck das Verdeckflächenelement und das Konstruktionselement miteinander mittels eines streifenförmigen PUR-Gießharz-Wulstelementes mechanisch fest und dicht verbunden.

Nachteilhafterweise ist diese Verbindung unter optischen Gesichtspunkten unzureichend. Weiterhin ist eine derartige Verbindung nur mittels aufwändiger Verarbeitungsprozesse realisierbar, und ein senkrecht zu dem Verdeckflächenelement verlaufender Bauraum ist gegebenenfalls unerwünscht groß.

Auch aus der DE 40 31 866 A1 ist eine Verbindung einer Kunststoffscheibe an einem Verdeckbezug bekannt. Die Kunststoffscheibe ist an ihrer Außenseite mit einer U-förmigen Randeinfassung aus gummielastischem Material versehen, die im Einbauzustand der Fensterscheibe am Rand der Fensteröffnung des Verdeckbezugs abdichtend anliegt.

Eine derartige Verbindung eines Verdeckbezugs mit einer Kunststoffscheibe ist aus Festigkeitsgründen nachteilhaft, da neben der Verbindung der U-förmigen Randeinfassung mit der Kunststoffscheibe auch die Verbindung des Verdeckbezugs mit der U-förmigen Randeinfassung festigkeitsrelevant ist, und durch die Anzahl der Verbindungen die Gesamtfestigkeit des Verbindungsbereichs vergleichsweise gering ist. Zudem ist eine derartige Verbindung dahingehend nachteilig, dass sie nur mittels aufwändiger Verarbeitungsprozesse realisierbar ist.

Aus der US 5,851,637 ist ein Verfahren zum Klebeverbinden einer insbesondere einen Verdeckbezug eines Boots bildenden flexiblen Materialbahn mit einer ein Fenster bildenden halbstarren thermoplastichen Kunstoff-Materialbahn aus z. B. Polycarbonat oder Acryl offenbart. Dabei wird der Verdeckbezug ohne Umbug mit der Fenster-Kunststoffbahn verklebt. Die freie Kante des Verdeckbezugs gegenüber der Fensteröffnung wird durch ein Ausschneiden der Öffnung aus dem Verdeckbezug mittels eines heißen Messers gebildet.

Weiterhin ist aus der US 5,601,328 eine Herausschneiden einer Windschutzcheibe oder eines anderen Fahrzeugfensters aus einer Fahrzeugkarosserie mittels oszillierender Messer bekannt, welche mit hoher Frequenz oszillieren.

Es ist Aufgabe der vorliegenden Erfindung, ein Verfahren zur Herstellung eines freien Endes eines Verdeckbezugs und dessen Anbindung an einer Scheibe eines Verdecks eines Cabriolet-Fahrzeug zu schaffen, mit dem eine definierte faserfreie Kante des Verdeckbezugs auf einfache Weise herstellbar ist und die Verbindung der Scheibe mit dem Verdeckbezug eine hohe Festigkeit aufweist.

Diese Aufgabe wird mit einem Verfahrengemäß den Merkmalen des Patentanspruchs 1 gelöst.

Die Erfindung sieht ein Verfahren bei einem Verdeck eines Cabriolet-Fahrzeugs mit einer Scheibe und einem in einem Scheibenrandbereich an der Scheibe festgelegten Verdeckbezug vor, wobei erfindungsgemäß vorgeschlagen wird, dass der Verdeckbezug mit einem planen, umbugfreien Randbereich mit einem freien Ende an seiner einem Fahrzeuginnenbereich zugewandten Seite direkt an dem Scheibenrandbereich festgelegt wird.

Eine erfindungsgemäße Anbindung einer Scheibe, welche als eine Fensterscheibe aus Glas oder insbesondere formstabilem Kunststoff ausgebildet sein kann, an einem Verdeckbezug ist vorteilhafterweise mit hoher Festigkeit in einem sicher beherrschbaren und kostengünstigen Herstellungsprozess möglich, da zur Festlegung der Scheibe an dem Verdeckbezug nur eine Verbindung nötig ist.

Gegenüber Festlegungen von Verdeckbezügen mit einem Umbug kann bei einer umbugfreien Festlegung des Verdeckbezugs an der Scheibe gemäß der Erfindung Verdeckbezugmaterial eingespart werden, die Festigkeit der Verbindung kann erhöht und durch den Entfall der Wirkung von Querkräften auf den Verdeckbezug die Gefahr eines Abschälens des Verdeckbezugs von der Scheibe und einer Delamination des Verdeckbezugs reduziert werden. Hierdurch kann ein Verbindungsbereich des Verdeckbezugs mit der Scheibe zur Erhaltung einer geforderten Festigkeit vorteilhafterweise klein ausfallen. Letzteres hat wiederum den Vorteil, dass ein Durchsichtmaß der Scheibe erhöht werden kann.

Ein weiterer Vorteil der erfindungsgemäßen umbugfreien Anbindung gegenüber herkömmlichen Festlegungen mit einem Umbug ist der Entfall der Arbeitsschritte zur Herstellung des Umbugs, wodurch zum einen die Herstellzeit verkürzt und zum anderen die Herstellkosten vorteilhafterweise gesenkt werden können. Durch das vereinfachte System mit weniger Prozessschritten und weniger Teilen kann in vorteilhafter Weise auch der Umlaufbestand in der Fertigung reduziert werden. Zudem wirkt sich das erfindungsgemäße Verdeck vorteilhafterweise positiv auf das Ablegeverhalten des Verdecks aus.

Des Weiteren besteht gegenüber Verbindungen von Scheiben mit einem einen Umbug aufweisenden Verdeckbezug bei einem erfindungsgemäßen Verdeck vorteilhafterweise nicht die Gefahr der Ansammlung von Schmutz oder Grünspan unterhalb des Umbugs.

Weiterhin sieht die Erfindung vor, dass das freie Ende des Verdeckbezugs wenigstens bereichsweise als eine durch hochfrequenten Energieeintrag wie z. B. mittels eines Lasers oder mittels Ultraschalls erzeugte Schnittkante gebildet wird. Eine derartige Herstellung der Schnittkante des Verdeckbezugs hat den Vorteil, dass der Verdeckstoff mit dem erfindungsgemäßen Verfahren sehr schnell und kostengünstig geschnitten werden kann und eine insbesondere bei der Anbindung an eine Scheibe vorteilhafte ausfaserfreie Kante aufweist. So kann ein zusätzlicher Kantenschutz entbehrlich sein.

Eine Verbindung der Scheibe mit dem Verdeckbezug kann dabei auf vielfältige Weise realisiert werden. So ist es insbesondere vorteilhaft, wenn der Verdeckbezug mittels eines Klebers an dem Scheibenrandbereich festgelegt ist. Weiterhin kann zur Festlegung des Verdeckbezugs an der Heckscheibe auch eine Schweißverbindung zum Einsatz kommen.

Die Festigkeit im Verbindungsbereich des Verdeckbezugs und der Heckscheibe kann vorteilhafterweise dadurch erhöht werden, dass die Heckscheibe in dem Scheibenrandbereich aufgeraut ist.

Ein bei einer erfindungsgemäßen Festlegung des Verdeckbezugs an der Scheibe freies Ende des Verdeckbezugs wird in einer vorteilhaften Ausgestaltung der Erfindung durch einen Kantenschutz geschützt und versiegelt, welcher das freie Ende vor einer schnellen Abnützung schützt.

Ein sehr kostengünstiger Kantenschutz ist mit einem Kunststoffprofil herstellbar, wobei das Kunststoffprofil das freie Ende des Verdeckbezugs einfasst und dieses insbesondere vor Umwelteinflüssen schützt.

In einer vorteilhaften Ausgestaltung der Erfindung kann es vorgesehen sein, dass der Kantenschutz wenigstens bereichsweise mit der Scheibe verbunden wird, wobei hierdurch eine große Fläche zur Festlegung des Kantenschutzes zur Verfügung steht und dieser dementsprechend fest angeordnet werden kann.

Besonders kostengünstig kann ein Kantenschutz auch realisiert werden, wenn der Kantenschutz als eine Umspritzung oder Versiegelung des freien Endes des Verdeckbezugs ausgebildet ist.

In einer vorteilhaften Weiterbildung der Erfindung ist es vorgesehen, dass die Scheibe aus Verbundsicherheitsglas mit wenigstens zwei plattenförmigen Glaselementen ausgebildet ist, wobei ein dem Fahrzeuginnenbereich zugeordnetes erstes Glaselement größer als ein dem Fahrzeuginnenbereich abgewandtes zweites Glaselemente ausgebildet ist.

Hierbei kann der Verdeckbezug vorteilhafterweise derart an dem ersten größeren Glaselement angeordnet werden, dass der Verdeckbezug insbesondere eine bündige Oberfläche mit dem zweiten kleineren Glaselement bildet, wobei eine dem Fahrzeuginnenbereich abgewandte Außenseite des Verdeckbezugs und eine dem Fahrzeuginnenbereich abgewandte Außenseite des zweiten kleineren Glaselements wenigstens annähernd in einer Ebene liegen und hierdurch ein sogenannter Flush-glazing-Effekt erzielt wird. Bei einer derartigen Anordnung des Verdeckbezugs kann vorteilhafterweise auf einen Kantenschutz verzichtet werden.

Wenn der Scheibenrandbereich gestuft ausgebildet ist und der Verdeckbezug im Bereich der Stufe des Scheibenrandbereichs angeordnet ist, kann eine Festlegung des Verdeckbezugs vorteilhafterweise derart realisiert werden, dass eine dem Fahrzeuginnenbereich gegenüberliegende Außenseite der Scheibe und eine dem Fahrzeuginnenbereich gegenüberliegende Außenseite des Verdeckbezugs in dem Scheibenrandbereich eine gemeinsame Ebene bilden und auch hierbei ein sogenannter Flush-glazing-Effekt entsteht. Ein Übergang der Scheibe in den Verdeckbezug erfolgt hierdurch innerhalb einer bündigen Oberfläche, womit eine optisch ansprechende Lösung erzielt wird und auf einen Kantenschutz verzichtet werden kann.

In einem vorteilhaften Verfahren zur Herstellung der Schnittkante wird der Energieeintrag derart gewählt, dass bei der Herstellung der Schnittkante durch ein Verschmelzen von Fasern des Verdeckbezugs im Bereich der Schnittkante eine glatte Kantenkontur entsteht, welche eine Versiegelung darstellt und die Schnittkante vor einer schnellen Abnützung schützt.

Weitere Vorteile und vorteilhafte Ausführungen eines Verfahrens nach der Erfindung ergeben sich aus den Patentansprüchen, der Zeichnung und der Beschreibung.

Nachfolgend sind vorteilhafte Ausführungsbeispiele anhand der Zeichnung prinzipmäßig beschrieben.

Es zeigt:
- Fig. 1: eine dreidimensionale Ansicht eines Cabriolet-Fahrzeugs mit einem Verdeck und einer Heckscheibe;
- Fig. 2: eine vereinfachte ausschnittsweise Darstellung eines Verdeckbezugs des Verdecks und der Heckscheibe, welche mittels eines Klebers verbunden sind;
- Fig. 3: eine vereinfachte ausschnittsweise Darstellung des Verdeckbezugs und der Scheibe der Fig. 2, wobei an einem freien Ende des Verdeckbezugs ein Kantenschutz vorgesehen ist;
- Fig. 4: eine vereinfachte ausschnittsweise Darstellung des Verdeckbezugs und der Scheibe der Fig. 2 und Fig. 3 mit einem alternativen Kantenschutz;
- Fig. 5: eine vereinfachte ausschnittsweise Darstellung des Verdeckbezugs und der Scheibe der Fig. 2 bis Fig. 4 mit einem weiteren alternativen Kantenschutz; und
- Fig. 6: eine stark vereinfachte ausschnittsweise Darstellung einer alternativ zu der in der Fig. 2 ausgebildeten Heckscheibe mit einer Anbindung an den Verdeckbezug.

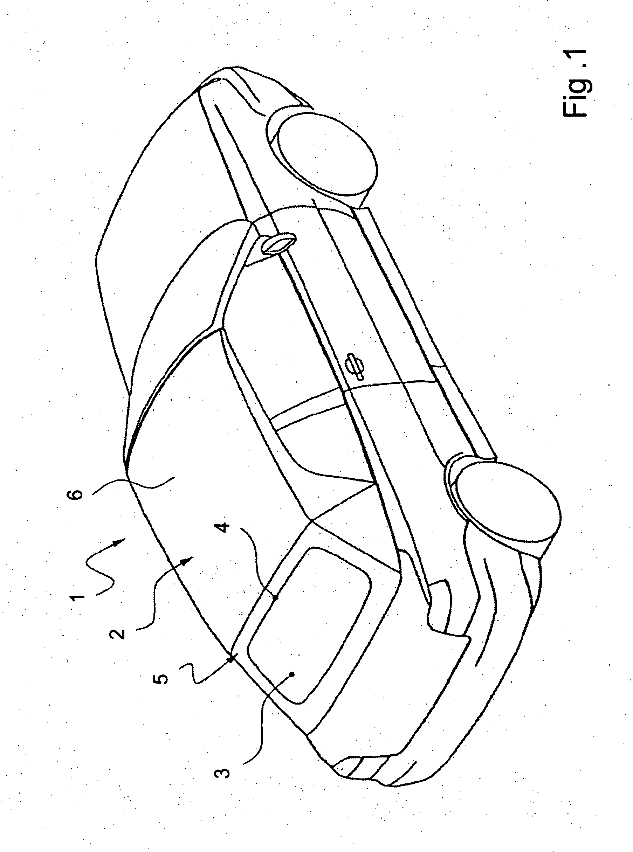

In Fig. 1 ist ein Cabriolet-Fahrzeug 1 mit einem ein sogenanntes Soft-Top bildenden Verdeck 2 dargestellt, welches in einem heckseitigen Bereich 5 eine wenigstens annähernd rechteckig geformte, als Heckscheibe 3 ausgebildete formstabile Scheibe aufweist. Die Heckscheibe 3 ist dabei in einem Randbereich 4 an einem Verdeckbezug 6 des Verdecks 2 festgelegt.

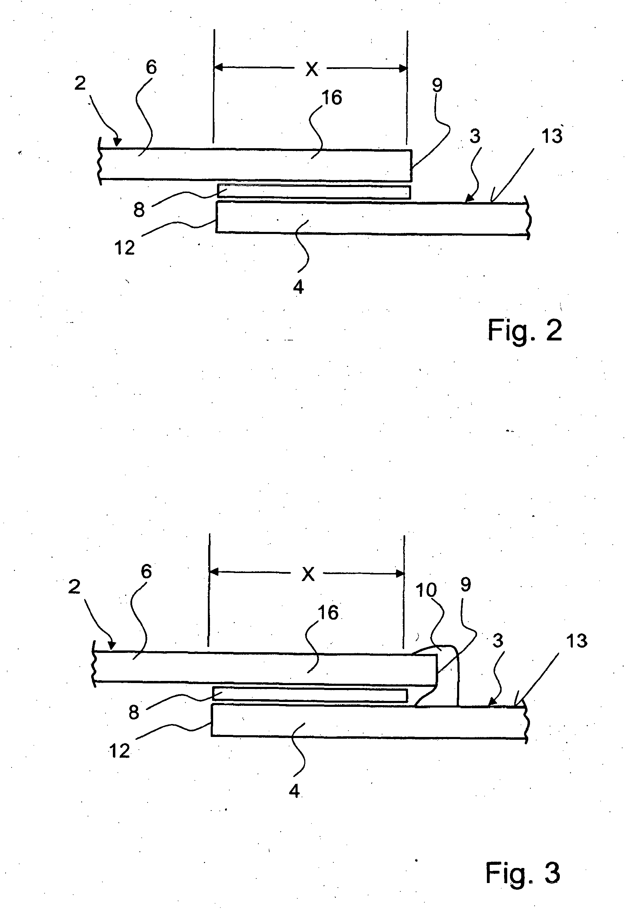

In der Fig. 2 ist ein Randbereich 16 des Verdeckbezugs 6 und der Randbereich 4 der Heckscheibe 3 dargestellt, wobei der Verdeckbezug 6 in einem Überlappungsbereich X mittels eines in dem Überlappungsbereich X vorgesehenen Klebers 8 direkt mit der in diesem Bereich aufgerauten Heckscheibe 3 verbunden ist. Der Verdeckbezug 6 ist dabei plan mit einer der Heckscheibe 3 zugewandten Seite 15 auf der Heckscheibe 3 angeordnet.

Zum Schutz eines freien Endes 9 des Verdeckbezugs 6 ist ein Kantenschutz 10 vorgesehen, welcher bei dem in der Fig. 3 dargestellten Ausführungsbeispiel mit einem Kunststoffprofil 10 ausgebildet ist.

Das Kunststoffprofil 10 ist in einem beliebigen Abstand zu einer Scheibenkante 12 derart auf eine Scheibenfläche 13 gespritzt, dass das Kunststoffprofil 11 einerseits das freie Ende 9 des Verdeckbezugs 6 vor Umwelteinflüssen und dergleichen schützt und andererseits einen festen Halt auf der Scheibenfläche 13 hat.

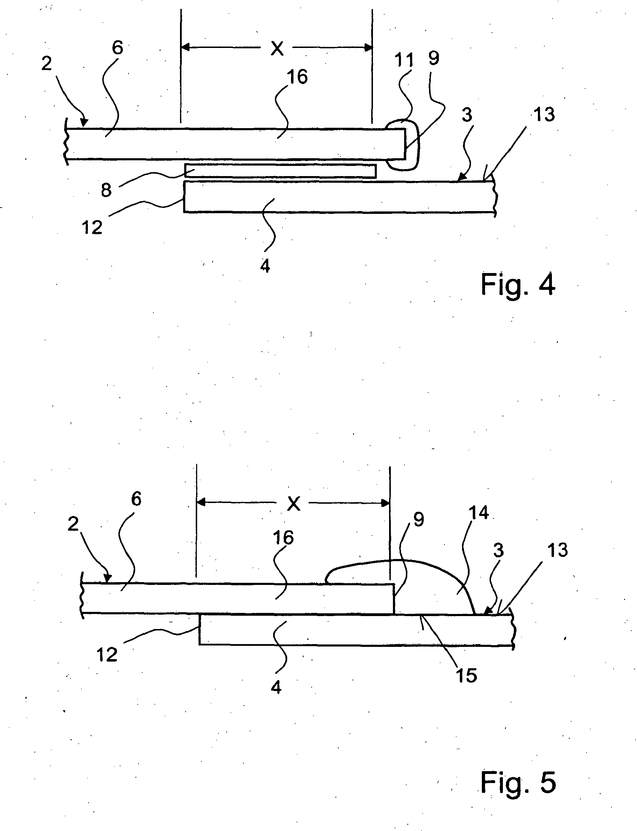

In der Fig. 4 ist ein alternativer Kantenschutz 11 dargestellt, welcher als eine Umspritzung 11 des freien Endes 9 des Verdeckbezugs 6 mit Kunststoff ausgebildet ist, so dass das freie Ende 9 des Verdeckbezugs 6 mit geringem Materialaufwand geschützt wird.

Schließlich ist in der Fig. 5 eine weitere Ausführungsalternative mit einem als Abdeckprofil 14 ausgebildeten Kantenschutz dargestellt, wobei das vorliegend aus einem üblichen Kunststoff gefertigte Abdeckprofil 14 durch eine große Kontaktfläche 15 mit der Scheibenfläche 13 einen besonders festen und sicheren Schutz des freien Endes 9 des Verdeckbezugs 6 ermöglicht.

Die Herstellung des eine Schnittkante bildenden freien Endes 9 des Verdeckbezugs 6 kann mittels eines Lasers oder mittels Ultraschalls realisiert werden, wobei das Material des Verdeckbezugs 6 im Bereich des freien Endes 9 während des Schneidens des Verdeckbezugs 6 verschmilzt, so dass eine glatte Kante entsteht, welche an sich einen Schutz für den Verdeckbezug 6 bildet und gegebenenfalls mit einem zusätzlichen im Vorstehenden beschriebenen Kantenschutz versehen werden kann.

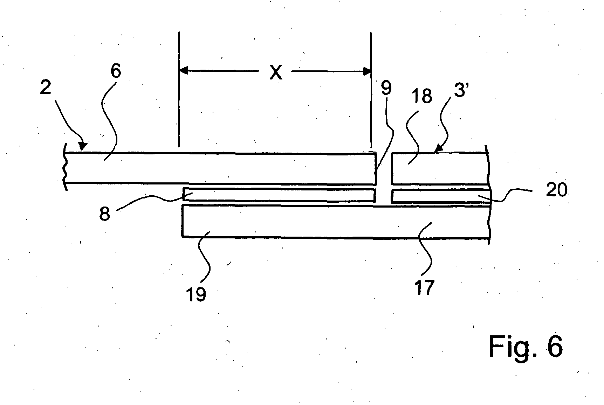

In Fig. 6 ist eine alternativ zu der beispielsweise in der Fig. 2 dargestellten Heckscheibe 3 ausgebildete Heckscheibe 3' mit dem Verdeckbezug 6 dargestellt, wobei die Heckscheibe 3' vorliegend mit Verbundsicherheitsglas gebildet ist und zwei plattenförmig ausgebildeten Glaselementen 17, 18 aufweist, welche vorliegend über eine als Folie 20, beispielsweise eine reißfeste Polyvinylbutyral-Folie, ausgebildete Zwischenschicht miteinander verbunden sind. Die beiden Glaselemente 17, 18 weisen dabei vorliegend eine Dicke von etwa 2,1 mm und die Folie 20 eine Dicke im Bereich zwischen 0,38 mm und 0,78 mm auf. Die Dicken dieser Elemente 17, 18, 20 können in einer alternativen Ausbildung selbstverständlich auch hiervon abweichende Werte annehmen.

Ein dem Fahrzeuginnenbereich zugewandtes erstes Glaselement 17 der Heckscheibe 3' ist dabei größer als ein zweites, dem Fahrzeuginnenbereich abgewandtes Glaselement 18 der Heckscheibe 3' ausgebildet, so dass das erste Glaselement 17 in einem Scheibenrandbereich 19 insbesondere um die gesamte Heckscheibe 3' verlaufend über das zweite Glaselement 18 hinausragt und mit dem zweiten Glaselement 18 eine Stufe bildet.

In dem über das zweite kleinere Glaselement 18 hinausragenden Scheibenrandbereich 19 ist auf einer dem Fahrzeuginnenbereich abgewandten Seite analog zu den bereits beschriebenen Ausführungsbeispielen in dem Überlappungsbereich X der Verdeckbezug 6 angebunden, wobei eine dem Fahrzeuginnenbereich abgewandte Seite des Verdeckbezugs 6 mit einer dem Fahrzeuginnenbereich abgewandten Seite des zweiten Glaselements 18 eine gemeinsame Ebene bildet, wodurch in vorteilhafter Weise ein sogenannter Flush-glazing-Effekt erzielt wird und somit eine insbesonders optisch ansprechende Anbindung des Verdeckbezugs 6 an die Heckscheibe 3' erzielt ist.

Selbstverständlich kann ein Fachmann auch bei diesem Ausführungsbeispiel bei entsprechenden Anforderungen an dem freien Ende des Verdeckbezugs 6 einen Kantenschutz vorsehen.

## Patentansprüche

1. Verfahren zur Herstellung eines freien Endes (9) eines Verdeckbezugs (6) eines Verdecks (2) eines Cabriolet-Fahrzeugs (1) und dessen Verbindung mit einer Scheibe (3) des Verdecks in einem Scheibenrandbereich (4),
wobei der Verdeckbezug (6) mit einem planen, umbugfreien Randbereich mit einem freien Ende (9) an seiner einem Fahrzeuginnenbereich zugewandten Seite (15) direkt an dem Scheibenrandbereich (4) festgelegt wird,
**dadurch gekennzeichnet,**
**dass** das freie Ende (9) des Verdeckbezugs (6) wenigstens bereichsweise als eine durch hochfrequenten Energieeintrag erzeugte Schnittkante gebildet wird.

2. Verfahren nach Anspruch 1,
**dadurch gekennzeichnet,**
**dass** der Verdeckbezug (6) mittels eines Klebers (8) an dem Scheibenrandbereich (4) festgelegt wird.

3. Verfahren nach einem der Ansprüche 1 oder 2,
**dadurch gekennzeichnet,**
**dass** die Heckscheibe (3) in dem Scheibenrandbereich (4) aufgeraut ist.

4. Verfahren nach einem der Ansprüche 1 bis 3,
**dadurch gekennzeichnet,**
**dass** an dem freien Ende (9) des Verdeckbezugs (6) ein Kantenschutz (10, 11, 14) vorgesehen wird.

5. Verfahren nach Anspruch 4,
**dadurch gekennzeichnet,**
**dass** der Kantenschutz (10, 14)mit einem Kunststoffprofil ausgebildet wird, welcher das freie Ende (9) des Verdeckbezugs (6) einfasst.

6. Verfahren nach einem der Ansprüche 4 oder 5,
**dadurch gekennzeichnet,**
**dass** der Kantenschutz (10, 11, 14) wenigstens bereichsweise mit der Scheibe (3) verbunden wird.

7. Verfahren nach einem der Ansprüche 4 bis 6,
**dadurch gekennzeichnet,**
**dass** der Kantenschutz (11) als eine Umspritzung oder Versiegelung des freien Endes (9) des Verdeckbezugs (6) ausgebildet wird.

8. Verfahren nach einem der Ansprüche 1 bis 7,
**dadurch gekennzeichnet,**
**dass** die Scheibe (3) aus Glas, insbesondere Verbundsicherheitsglas, oder transparentem Kunststoff ausgebildet ist.

9. Verfahren nach einem der Ansprüche 1 bis 8,
**dadurch gekennzeichnet,**
**dass** die Scheibe (3) aus Verbundsicherheitsglas mit wenigstens zwei plattenförmigen Glaselementen ausgebildet ist, wobei ein dem Fahrzeuginnenbereich zugeordnetes erstes Glaselement (17) größer als ein dem Fahrzeuginnenbereich abgewandtes zweites (18) Glaselemente ausgebildet ist.

10. Verfahren nach Anspruch 9,
**dadurch gekennzeichnet,**
**dass** der Verdeckbezug derart an dem ersten größeren Glaselement (17) angeordnet wird, dass der Verdeckbezug (6) eine bündige Oberfläche mit dem zweiten kleineren Glaselement (18) bildet.

11. Verfahren nach einem der Ansprüche 1 bis 10,
**dadurch gekennzeichnet,**
**dass** der Scheibenrandbereich gestuft ausgebildet ist und der Verdeckbezug im Bereich der Stufe des Scheibenrandbereichs, insbesondere eine bündige Oberfläche mit der Scheibe bildend, angeordnet wird.

12. Verfahren nach einem der Ansprüche 1 bis 11,
**dadurch gekennzeichnet,**
**dass** die Schnittkante (9) des Verdeckbezugs (6) wenigstens bereichsweise mittels Ultraschall- oder Laserschneiden erzeugt wird.

13. Verfahren nach einem der Ansprüche 1 bis 12,
**dadurch gekennzeichnet,**
**dass** der Energieeintrag bei der Herstellung der Schnittkante (9) derart gewählt wird, dass durch ein Verschmelzen von Fasern des Verdeckbezugs (6) eine glatte Kontur der Schnittkante (9) erzeugt wird.

## Claims

1. A method for preparing a free end (9) of a hood cover (6) of a hood (2) of a convertible vehicle (1) and its connection to a window (3) of the hood in a window edge region (4),
wherein the hood cover (6) is fixed directly with a planar edge region with no edge fold and with a free end (9) to the window edge region (4) on the side (15) of the hood cover (6) facing a vehicle interior,
**characterised in that** the free end (9) of the hood cover (6) is formed at least partially as a cut edge generated by high-frequency energy input.

2. The method according to claim 1, **characterised in that** the hood cover (6) is fixed to the window edge region (4) by means of an adhesive (8).

3. The method according to any one of claims 1 or 2, **characterised in that** the rear window (3) is roughened up in the window edge region (4).

4. The method according to any one of claims 1 to 3, **characterised in that** an edge protection (10, 11, 14) is provided at the free end (9) of the hood cover (6).

5. The method according to claim 4, **characterised in that** the edge protection (10, 14) is provided with a plastic profile surrounding the free end (9) of the hood cover (6).

6. The method according to any one of claims 4 or 5, **characterised in that** the edge protection (10, 11, 14) is at least partially connected to the window (3).

7. The method according to any one of claims 4 to 6, **characterised in that** the edge protection (11) is provided by extrusion coating or sealing the free end (9) of the hood cover (6).

8. The method according to any one of claims 1 to 7, **characterised in that** the window (3) is made of glass, in particular laminated safety glass, or transparent plastics.

9. The method according to any one of claims 1 to 8, **characterised in that** the window (3) is made of laminated safety glass comprising at least two plate-shaped glass elements, wherein a first glass element (17) facing the vehicle interior is larger than a second glass element (18) turned away from the vehicle interior.

10. The method according to claim 9, **characterised in that** the hood cover is arranged on the larger, first glass element (17) such that the hood cover (6) forms a flush surface with the smaller, second glass element (18).

11. The method according to any one of claims 1 to 10, **characterised in that** the window edge region is stepped and the hood cover is arranged in the region of the step of the window edge region, in particular forming a flush surface with the window.

12. The method according to any one of claims 1 to 11, **characterised in that** the cut edge (9) of the hood cover (6) is generated, at least partially, by means of ultrasonic or laser cutting.

13. The method according to any one of claims 1 to 12, **characterised in that** the energy input during the preparation of the cut edge (9) is selected such that a smooth contour of the cut edge (9) is produced by fusing fibres of the hood cover (6).

## Revendications

1. Procédé de réalisation d'une extrémité libre (9) d'un recouvrement de capote (6) d'une capote (2) d'un véhicule cabriolet (1) et de sa liaison avec une lunette (3) de la capote dans une région de bord de lunette (4),
dans lequel procédé ledit recouvrement de capote (6) est fixé directement avec une région de bord planaire sans repli et avec une extrémité libre (9) à la région de bord de lunette (4) sur le côté (15) du recouvrement de capote (6) tourné vers une région intérieure du véhicule, **caractérisé en ce que** l'extrémité libre (9) du recouvrement de capote (6) est réalisée au moins partiellement sous forme d'un bord de coupe produit par un apport d'énergie à haute fréquence.

2. Procédé selon la revendication 1, **caractérisé en ce que** le recouvrement de capote (6) est fixé à la région de bord de lunette (4) au moyen d'un adhésif (8).

3. Procédé selon l'une quelconque des revendications 1 ou 2, **caractérisé en ce que** la lunette arrière (3) est rendue rugueuse dans la région de bord de lunette (4).

4. Procédé selon l'une quelconque des revendications 1 à 3, **caractérisé en ce que** l'on prévoit une protection de bord (10, 11, 14) à l'extrémité libre (9) du recouvrement de capote (6).

5. Procédé selon la revendication 4, **caractérisé en ce que** la protection de bord (10, 14) est réalisée avec un profilé en matière plastique qui borde l'extrémité libre (9) du recouvrement de capote (6).

6. Procédé selon l'une quelconque des revendications 4 ou 5, **caractérisé en ce que** la protection de bord (10, 11, 14) est reliée au moins partiellement à la lunette (3).

7. Procédé selon l'une quelconque des revendications 4 à 6, **caractérisé en ce que** la protection de bord (11) est réalisée par enrobage par injection ou imperméabilisation de l'extrémité libre (9) du recouvrement de capote (6).

8. Procédé selon l'une quelconque des revendications 1 à 7, **caractérisé en ce que** la lunette (3) est réalisée en verre, notamment en verre de sécurité feuilleté, ou en matière plastique transparente.

9. Procédé selon l'une quelconque des revendications 1 à 8, **caractérisé en ce que** la lunette (3) est réalisée en verre de sécurité feuilleté comportant au moins deux éléments vitrés en forme de plaques, dont un premier élément vitré (17) tourné vers l'intérieur du véhicule est plus grand qu'un deuxième élément vitré (18) détourné de l'intérieur du véhicule.

10. Procédé selon la revendication 9, **caractérisé en ce que** le recouvrement de capote est disposé sur le premier élément vitré (17) majeur de manière à constituer une surface disposée au ras du deuxième élément vitré (18) mineur.

11. Procédé selon l'une quelconque des revendications 1 à 10, **caractérisé en ce que** la région de bord de lunette est en gradins et le recouvrement de capote est disposé dans la région du gradin de la région de bord de lunette, constituant notamment une surface disposée au ras de la lunette.

12. Procédé selon l'une quelconque des revendications 1 à 11, **caractérisé en ce que** le bord de coupe (9) du recouvrement de capote (6) est réalisée, au moins partiellement, par découpe à ultrasons ou par découpe laser.

13. Procédé selon l'une quelconque des revendications 1 à 12, **caractérisé en ce que** l'apport d'énergie lors de la réalisation du bord de coupe (9) est choisi de manière à réaliser un contour lisse du bord de coupe (9) par fusion de fibres du recouvrement de capote (6).
